**Europäisches Patentamt**

**European Patent Office**

**Office européen des brevets**

(19)

(11) Numéro de publication: **0 192 569**

**B1**

(12) # FASCICULE DE BREVET EUROPEEN

(45) Date de publication du fascicule du brevet: **12.09.90**

(51) Int. Cl.⁵: **G 09 F 3/00**

(21) Numéro de dépôt: **86400329.8**

(22) Date de dépôt: **17.02.86**

(54) **Système d'identification d'un objet de valeur.**

(30) Priorité: **21.02.85 FR 8502528**

(43) Date de publication de la demande:
**27.08.86 Bulletin 86/35**

(45) Mention de la délivrance du brevet:
**12.09.90 Bulletin 90/37**

(84) Etats contractants désignés:
**AT BE CH DE GB IT LI LU NL SE**

(56) Documents cités:
**US-A-4 025 759**
**US-A-4 168 586**
**US-A-4 233 964**
**US-A-4 254 552**
**US-A-4 271 352**
**US-A-4 317 287**

(73) Titulaire: **Despres, Jean-Albert**
**7, rue Berryer**
**F-75008 Paris (FR)**

(72) Inventeur: **Despres, Jean-Albert**
**7, rue Berryer**
**F-75008 Paris (FR)**

(74) Mandataire: **Durand, Yves Armand Louis et al**
**Cabinet Z. Weinstein 20, Avenue de Friedland**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention a pour objet un système d'identification d'un objet de valeur tel qu'un objet d'art, du type décrit dans le préambule de la revendication principale.

Un système de ce type est décrit dans le brevet US No 4 233 964 au nom de JEFFERTS. Dans ce système l'élément insert présente des encoches ayant toutes la même forme. L'information réside dans l'absence ou la présence, à un endroit prédéterminé, d'une telle encoche. Ceci signifie que le code est du type binaire.

Ce système connu présente des inconvénients majeurs. Ainsi pour définir une seule lettre de l'alphabet ou un chiffre, l'élément insert doit comprendre un nombre approprié d'emplacements d'encoches. Ceci a pour conséquence que l'insert doit avoir une taille relativement importante.

On notera encore que le brevet US No 4 025 759 enseigne seulement d'utiliser un ordinateur pour établir une corrélation entre une information lue et des informations stockées, sans pour autant donner un enseignement quant à la façon de coder les informations dans l'insert.

La présente invention a pour objectif de proposer un système d'identification d'un objet de valeur, qui ne présente pas les inconvénients susmentionnés de l'état de la technique.

Pour atteindre ce but, le système selon l'invention présente des caractéristiques qui sont énoncées dans la partie caractérisante de la revendication principale.

Une caractéristique avantageuse de l'invention est énoncée dans la revendication 2.

D'autres caractéristiques et avantages de l'invention apparaitront mieux dans la description qui suit et se réfère aux dessins annexés, donnés uniquement à titre d'exemple et dans lesquels:

La figure 1 est une vue agrandie partielle et en élévation (demi-vue extérieure et demi-vue en coupe) d'un élément ou insert destiné à être incorporé de manière invisible dans un objet d'art.

La figure 2 est un schéma illustrant les moyens essentiels utilisés dans cette invention.

Suivant un exemple de réalisation, et en se reportant aux dessins annexés, un dispositif d'identification conforme aux principes de l'invention comprend essentiellement un élément 1 portant un code et insérable de manière invisible dans un objet de valeur quelconque (non représenté), un système de lecture L de l'élément, et un ordinateur O associé à un fichier F qui centralisent toutes les informations correspondant au code de l'élément 1, c'est-à-dire finalement tous les renseignements relatifs à l'objet de valeur contenant ledit élément.

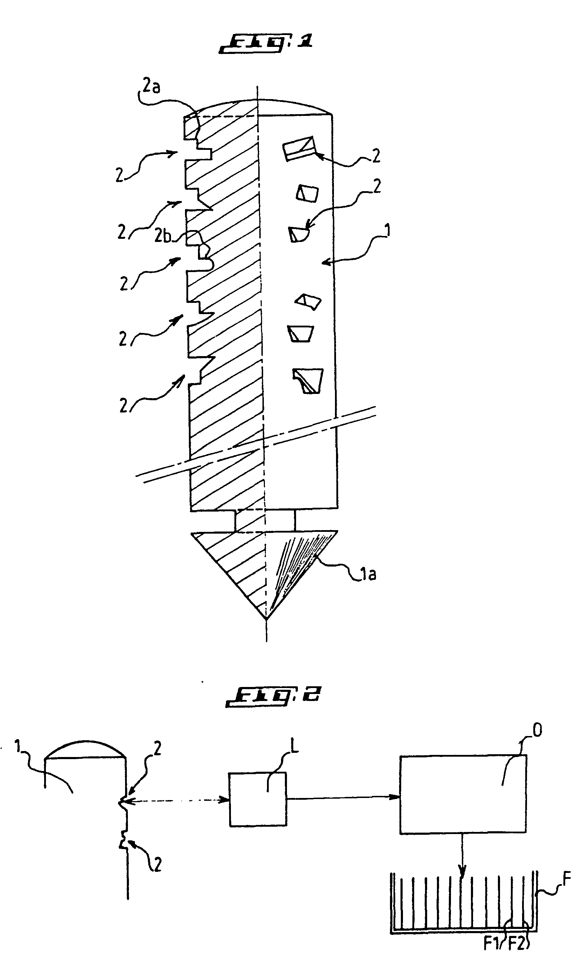

Comme on le voit sur la figure 1, l'élément ou insert 1 peut présenter la forme d'un cylindre 1 muni d'une pointe la permettant son insertion dans un objet de valeur, étant entendu que cet objet pourra être préalablement percé pour recevoir l'élément 1. Celui-ci pourra être rendu solidaire de l'objet au moyen par exemple d'une colle à forte adhérence, et, dans tous les cas, l'élément 1 sera noyé dans l'objet de façon à ne pas pouvoir être repéré visuellement.

Sur l'élément 1, sont prévues des encoches ou analogues 2 qui sont réalisées à l'aide d'un moyen quelconque et constituent un code correspondant à des informations relatives à l'objet dans lequel est incorporé l'élément 1.

Suivant une réalisation préférée, chaque encoche 2 est constituée d'une pluralité de parties planes et/ou arquées. Ainsi, en se reportant à la figure 1, on voit que par exemple l'encoche 2a est formée d'une pluralité de parties planes, tandis que l'encoche 2b comporte des parties planes et une partie courbe. Les encoches 2 peuvent être orientées perpendiculairement ou non à l'axe de l'élément 1, et elles ont chacune une forme particulière en fonction de la signification qu'on veut leur donner.

Suivant un mode de réalisation préféré, les encoches 2 symbolisent chacune une lettre de l'alphabet ou un chiffre, ou bien les deux.

L'élément cylindrique 1 est réalisé en un métal approprié et permettant la détection ou la localisation dudit élément par tout moyen de lecture approprié. C'est ainsi que l'élément 1 pourra être détecté par rayonnement X ou bien par écho ultrasonique.

Comme on le voit sur la figure 2, il en résulte que les encoches 2 de l'élément 1 pourront être lues par un système de lecture approprié L. Une telle lecture pourra être par exemple effectuée sur un objet de valeur proposé à la vente et dont on veut vérifier l'authenticité. La lecture radiographique ou par écho étant faite, les informations correspondant au code de l'élément 1 seront déchiffrées par un ordinateur O associé à un fichier F qui sera bien sûr situé dans un endroit présentant toutes les garanties voulues de secret.

Plus précisément, l'ordinateur central O établira la corrélation entre la forme de chaque encoche 2 et l'information (lettre de l'alphabet ou autre) qui lui correspond, et pourra transmettre au fichier F l'ordre permettant d'obtenir la ou les fiches F1, F2 etc... identifiant en clair et complètement l'objet de valeur muni de l'élément 1.

On comprend donc que l'intérêt de ce système réside essentiellement dans la centralisation sur fichier central des données relatives à un très grand nombre d'objets de valeur, étant bien entendu que ce fichier central ne sera accessible qu'à des personnes dûment habilitées.

Les fiches F1, F2.... Fn du fichier central F pourront bien entendu contenir tous les renseignements nécessaires quant au propriétaire, à l'origine ou aux caractéristiques de l'objet de valeur. Il va sans dire que l'ordinateur pourra recevoir toutes les inscriptions d'insertion et traiter tous les dossiers que représentent ces insertions, étant bien entendu qu'il se chargera aussi des ordres que pourront donner les souscripteurs, par exemple dans le cas où l'objet de valeur subit une mutation, ce qui nécessite par conséquent des modifications ou des compléments à apporter au fichier central.

On a donc réalisé suivant l'invention un procédé et un dispositif d'identification d'objets de valeur qui permettent de prouver avec une certitude absolue l'origine ou l'authenticité de ces objets.

Bien entendu, l'invention n'est pas limitée au mode de réalisation décrit et illustré qui n'a été donné qu'à titre d'exemple.

C'est ainsi que la forme, la matière et les dimensions de l'élément insérable dans l'objet, de même que le découpage des encoches dans cet élément, peuvent être quelconques, sans sortir du cadre de l'invention. Les encoches 2 peuvent présenter des parties plus ou moins profondes et ayant des orientations différentes par rapport à l'axe de l'élément.

De même l'ordinateur et le fichier qui lui est associé peuvent être disposés ou agencés d'une manière quelconque, la condition essentielle étant que la ou les fiches portant les renseignements complets relativement à l'objet concerné soient identifiables par l'ordinateur selon les informations obtenues à partir des encoches de l'élément insérable dans ledit objet.

**Revendications**

1. Système d'identification d'un objet de valeur tel qu'un objet d'art, comprenant un élément (1) incorporé de façon invisible dans ledit objet et porteur de données codées d'indentification de celui-ci, sous forme d'encoches (2) pratiquées dans ledit élément (1), des moyens de lecture (L) des données codées, tels qu'un dispositif de lecture à rayons X ou ultra-sons, des moyens mémoire (F) contenant des informations relatives audit objet, tel qu'un fichier, caractérisé en ce que chaque encoche (2) présente une forme spécifique constituant le code d'une valeur analogique telle qu'une lettre de l'alphabet ou un chiffre et en ce qu'un dispositif ordinateur (O) est prévu, qui est adapté pour établir la corrélation entre les données d'identification codées lues et des informations contenues dans ledit fichier (F).

2. Système selon la revendication 1, caractérisé en ce que les encoches (2) précitées comportent chacune des parties planes (2a) et/ou arquées (2b), dont la combinaison constitue le code d'une valeur analogique précitée.

**Patentansprüche**

1. System zur Identifizierung eines Wertgegenstandes wie eines Kunstgegenstandes, mit einem in dem besagten Gegenstand in unsichtbarer Weise eingebauten Element (1) welches kodierte Daten zur Identifizierung des Gegenstandes in der Form von in dem besagten Element (1) eingearbeiteten Kerben (2) trägt, Mitteln (L) zum Ablesen der kodierten Daten, wie einer Röntgenstrahlen oder Ultraschall- Ablesungsvorrichtung, den besagten Gegenstand betreffende Informationen enthaltenden Speichermitteln (F) wie einer Kartei, dadurch gekennzeichnet, dass jede Kerbe (2) eine den Kode eines Analogwertes wie eines Buchstabes des Alphabets oder einer Ziffer bildende spezifische Gestalt aufweist und dass eine Rechnervorrichtung (O) vorgesehen ist, welche angepasst ist, um die Korrelation zwischen den abgelesenen kodierten Identifizierungsdaten und den in der besagten Kartei (F) enthaltenen Informationen herzustellen.

2. System nach Anspruch 1, dadurch gekennzeichnet, dass die vorgenannten Kerben (2) jeweils ebene Teile (2a) und/oder bogenförmige Teile (2b) aufweisen, deren Kombination den Kode eines vorgenannten Analogwertes bildet.

**Claims**

1. System of identification of a valuable article such as an objet d'art comprising an element (1) incorporated in an invisible manner into the said article and carrying coded data for the identification thereof in the shape of notches (2) made in the said element (1), means (L) for reading the coded data such as an X-rays or ultra-sound reading device, memory means (F) containing information relating to the said article, such as a card-index, characterized in that each notch (2) exhibits a specific shape constituting the code of an analog value such as a letter of the alphabet or a numeral and in that a computer device (O) is provided, which is adapted to establish the correlation between the read coded identification data and the information contained in the said card-index (F).

2. System according to claim 1, characterized in that the aforesaid notches (2) comprise each one plane portions (2a) and/or arcuate portions (2b) the combination of which constitutes the code of an aforesaid analog value.

_Fig. 1_

2a

2

2

2 2b

2

2

2

1

2

1a

_Fig. 2_

1 2

L

O

2

F

F1 F2